# EUROPÄISCHE PATENTSCHRIFT

(11) **EP 2 145 529 B1**
(45) Veröffentlichungstag und Bekanntmachung des Hinweises auf die Patenterteilung: **26.10.2011**
(21) Anmeldenummer: 09008406.2
(22) Anmeldetag: 26.06.2009
(51) Int. Cl.: A01D 78/10

(54) **Heuwerbungsmaschine**
Hay making machine
Faneuse

(30) Priorität: 16.07.2008 DE 102008033351
(43) Veröffentlichungstag der Anmeldung: 20.01.2010
(73) Patentinhaber: Alois Pöttinger Maschinenfabrik Ges. m.b.H., 4710 Grieskirchen (AT)
(72) Erfinder: Ruttinger, Peter, 4720 Kallham (AT); Höftberger, Franz, Dipl.-Ing., 4673 Gaspoltshofen (AT); Legl, Ludwig, Dr.-Ing., 4611 Buchkirchen (AT)
(74) Vertreter: Thoma, Michael

(56) Entgegenhaltungen:
- EP-A1- 0 600 304
- EP-A2- 0 484 794
- EP-A2- 2 057 890
- DE-B4- 4 340 384
- DE-T2- 69 209 361
- US-A- 4 974 407

## Beschreibung

Die vorliegende Erfindung betrifft eine Heuwerbungsmaschine, vorzugsweise in Form eines Kreiselschwaders, mit einem sich im Wesentlichen in Fahrtrichtung erstreckenden Maschinenrahmen, der an einem vorderen Ende eine Ankupplungsvorrichtung zur Ankupplung an einen Schlepper aufweist und mit einem Fahrwerk am Boden abgestützt ist, sowie mit zumindest einem Rechkreisel, der mittels eines quer vom Maschinenrahmen auskragenden Tragarms am Maschinenrahmen angelenkt ist, wobei der längenunveränderbar ausgebildete und nur eine Tragarmschwenkachse aufweisende Tragarm an dem Maschinenrahmen in Fahrtrichtung betrachtet vor oder hinter dem Fahrwerk um die Tragarmschwenkachse schwenkbar gelagert und zusammen mit dem daran befestigten Rechkreisel in eine Transportstellung anhebbar und in eine Arbeitsstellung absenkbar ist.

Kreiselschwader besitzen regelmäßig recht große Rechkreisel, die in der Arbeitsstellung um aufrechte Kreiselachsen umlaufende Zinkenträger besitzen, an deren Enden Rechzinken befestigt sind, die auf ihrer Umlaufbahn zyklisch verschwenkt werden, um auf dem Boden liegendes Erntegut wie beispielsweise Gras und Heu zu einem Schwad zusammenzurechen. Insbesondere bei Mehrkreiselschwadern müssen die Rechkreisel zum Zwecke des Transports nach oben geschwenkt werden, um die maximal zulässige Spurbreite für den Straßenverkehr einhalten zu können. In ähnlicher Weise müssen auch Heuwerbungsmaschinen in Form von Zettern zum Straßentransport in ihrer Spurbreite verringert werden, indem die Rechkreisel, die typischerweise in einer quer zur Fahrtrichtung verlaufenden Reihe nebeneinander angeordnet sind, nach oben geschwenkt werden.

Hierzu ist es bekannt, die Rechkreisel an auskragenden Tragarmen anzulenken, die am Maschinenrahmen gelenkig gelagert und üblicherweise um eine liegende, in Fahrtrichtung weisende Tragarmschwenkachse zusammen mit dem daran befestigten Rechkreisel nach oben geklappt werden können. Die Verschwenkbarkeit der Tragarme wird dabei regelmäßig nicht nur dazu genutzt, den Rechkreisel in eine im Wesentlichen senkrecht nach oben stehende Straßentransportstellung zu schwenken, sondern auch auf dem Feld in eine nur ein Stück weit nach oben geschwenkte Feldtransportstellung auszuheben, in der die Rechzinken der Kreisel nicht über beispielsweise bereits zusammengerechte Schwaden kratzen.

Ein Problem bei derartigen schwenkbar aufgehängten Rechkreiseln von Kreiselschwadern ist dabei jedoch die Höhe der Rechkreisel in der nach oben geschwenkten Transportstellung. Sind die Rechkreisel senkrecht nach oben in die Straßentransportstellung geschwenkt, können die Rechkreisel höher nach oben ragen als das Dach des Schleppers, so dass bei niedrigen Durchfahrtshöhen Probleme entstehen können. Zum anderen wird das Fahrverhalten des Schwaders instabil, da der Schwenkpunkt sehr stark nach oben wandert.

Um hier Abhilfe zu schaffen, wurde bereits vorgeschlagen, die Tragarme teleskopierbar auszubilden, so dass in der abgesenkten Arbeitsstellung durch Ausfahren der Tragarme die Rechkreisel in der gewünschten Lage positionierbar und eine große Rechbreite erzielbar ist, während in der nach oben geschwenkten Transportstellung die Tragarme einteleskopiert werden, um die Höhe zu begrenzen. Eine solche Anordnung von Rechkreiseln zeigt beispielsweise die DE 43 40 384 B4.

Bei derartigen Heuwerbungsmaschinen sind die Rechkreisel zum Zwecke der Bodenanpassung an den genannten Tragarmen üblicherweise um eine in Fahrtrichtung weisende Achse schwenkbar aufgehängt, so dass beim Überfahren von Bodenunebenheiten ein Tastfahrwerk unter den Rechkreiseln die Ausrichtung der Rechzinken zum Boden anpassen kann. Hierbei entsteht jedoch beim Ausheben der Rechkreisel bisweilen das Problem, dass die nach unten weisenden Rechzinken durch Verkippen des ganzen Rechkreisels gegenüber dem Tragarm in den Boden stechen. Um hier Abhilfe zu schaffen, sieht die Schrift DE 692 09 361 T2 eine spezielle Maschinenrahmenausbildung vor, bei der die Anlenkpunkte der Tragarme am Maschinenrahmen sehr weit nach oben gezogen sind, um in der Arbeitsstellung eine nach unten hängende Ausrichtung der Tragarme realisieren und hierdurch wiederum - in Verbindung mit einer exzentrischen Kreiselgelenksachse - eine bestimmte Kippbewegung des Rechkreisels erzielen zu können. Die nach oben gezogene Anlenkung der Tragarme am Maschinenrahmen führt jedoch dazu, dass die Rechkreisel in der Transportstellung besonders weit nach oben geschwenkt werden, was selbst durch eine teleskopierbare Ausbildung der Tragarme nicht zur Gänze kompensiert werden kann.

Aus der EP 20 57 890 ist ein Kreiselschwader bekannt, bei dem der Kreiselrechen mittels eines Tragarms nach oben geschwenkt werden kann, wobei die Schwenkachse des Tragarms sowohl gegenüber einer horizontalen Ebene als auch gegenüber einer vertikalen Ebene spitzwinklig verkippt ist und wobei zusätzlich der Tragarm abknickbar ausgebildet ist. Ferner ist aus der EP 04 84 794 A2 ein Kreiselschwader bekannt, bei dem der Kreiselrechen mittels eines Tragarms nach oben geschwenkt werden kann, dessen Schwenkachse in Fahrtrichtung weist. Zusätzlich kann der Maschinenrahmen, an den der Tragarm angelenkt ist, um eine zusätzliche Achse abgeknickt werden, um den Schwerpunkt weiter abzusenken. Ferner ist aus der EP 06 00 304 A1 ein Kreiselschwader in Form eines Frontanbaugeräts zum Frontanbau an einen Traktor bekannt, dessen Rechkreisel mittels eines Tragarms verschwenkt werden können, dessen Schwenkachse räumlich gegenüber der Fahrtrichtung verkippt ist.

Der vorliegenden Erfindung liegt die Aufgabe zugrunde, eine verbesserte Heuwerbungsmaschine der eingangs genannten Art zu schaffen, der Nachteile des Standes der Technik vermeidet und Letzteren in vorteilhafter Weise weiterbildet. Vorzugsweise soll mit einer einfachen, nur wenige Bauteile aufweisenden Konstruktion gleichermaßen eine breite Ausladung in der Arbeitsstellung und eine günstige Transportstellung der Rechkreisel mit niedrigem Schwerpunkt erreicht werden.

Diese Aufgabe wird erfindungsgemäß durch eine Heuwerbungsmaschine gemäß Anspruch 1 gelöst. Bevorzugte Ausgestaltungen sind Gegenstand der abhängigen Ansprüche.

Es wird also vorgeschlagen, die auseinanderlaufenden Anforderungen niedriger Schwerpunkt in der Transportstellung, ausreichende Ausladung in der Arbeitsstellung und einstechfreies Ausheben nicht durch vielerlei Freiheitsgrade und dadurch eine entsprechend komplizierte Ausbildung der Tragarmanordnung und deren Lagerung zu erreichen, sondern durch eine einfache, insbesondere einachsige Schwenkbewegung um eine geschickt gewählte Schwenkachse gleichermaßen zu erfüllen. Während bislang immer davon ausgegangen wurde, dass das nach oben Schwenken um eine horizontale Achse zu erfolgen hat, beschreitet die Erfindung einen hiervon abweichenden Weg und schlägt eine gegenüber der Längsrichtung des Maschinenrahmens bzw. gegenüber der Fahrtrichtung verkippte Anordnung der Tragarmschwenkachse vor. Erfindungsgemäß ist die Tragarmschwenkachse, um die der Tragarm zusammen mit dem daran angelenkten Rechkreisel nach oben geschwenkt werden kann, gegenüber eine horizontalen Ebene spitzwinklig geneigt. Horizontale Ebene meint dabei letztlich eine bodenparallele Ebene, d.h. die Tragarmschwenkachse ist gegenüber der Horizontalen spitzwinklig geneigt, wenn der Heuwerbungsmaschine auf ebenem, horizontalem Boden steht. Durch die aus der Horizontalen herausgekippte Anordnung der Tragarmschwenkachse schwenkt der Tragarm beim Anheben in die Feldtransport- und/oder Straßentransportstellung nicht in der üblichen Weise senkrecht nach oben, sondern in einer gegenüber der Vertikalen gekippten Ebene. Hierdurch reduziert sich einerseits die maximale Höhe und der Schwerpunkt, wenn der Rechkreisel in die Transportstellung ganz nach oben geschwenkt wird. Zum anderen kann gleichzeitig erreicht werden, dass der bezüglich Einstechens in den Boden kritische Sektor des Rechkreisels, insbesondere der in Fahrtrichtung gesehen vordere Kreiselsektor, in dem die Rechzinken nach unten zeigen, zuerst bzw. stärker angehoben wird als die übrigen Sektoren des Rechkreisels. Hierdurch kann die Ausbildung der Tragarmkonstruktion beträchtlich vereinfacht werden, insbesondere kann auf aufwändige zusätzliche Freiheitsgrade wie Teleskopierbarkeit des Tragarms und speziell angeordnete, zusätzliche Schwenkachsen verzichtet werden. Erfindungsgemäß ist der Tragarm starr bzw. längenunveränderlich ausgebildet und besitzt nur eine einzige Tragarmschwenkachse, wobei bei ausreichender Ausladung in der abgesenkten Arbeitsstellung dennoch ein niedriger Schwerpunkt in der Transportstellung erreicht sowie ein Einstechen beim Absenken bzw. Ausheben vermieden werden kann. Auch komplizierte Umlenkgestänge am Kreiselausleger sind nicht erforderlich. Neben der Reduzierung der Transporthöhe kann hierdurch auch die Stützlast reduziert werden. Zudem wird ein großer Bodenfreiraum in der Feldtransportstellung erzielt. In besonders vorteilhafter Weiterbildung der Erfindung ist die Tragarmschwenkachse dabei nicht nur gegenüber der Horizontalen verkippt, sondern auch aus der Fahrtrichtung herausgedreht, d.h. gegenüber einer vertikalen, die Fahrtrichtung enthaltenden Ebene spitzwinklig geneigt angeordnet. Die Tragarmschwenkachse ist also vorteilhafterweise zweiachsig bzw. räumlich gegenüber der Längsrichtung des Maschinenrahmens bzw. gegenüber der Fahrtrichtung des Heuwerbungsmaschines verkippt. Hierdurch kann die angestrebte Höhenreduzierung bei einem insgesamt klein bleibenden, erforderlichen Schwenkwinkel noch verstärkt werden. Ggf. kann das Herausdrehen der Tragarmschwenkachse aus der vertikalen Längsebene auch für sich allein ohne die Verkippung gegenüber der Horizontalen vorteilhaft sein, beispielsweise um in der angehobenen Transportstellung den Rechkreisel an einem bestimmten Abschnitt besonders schlank werden zu lassen, beispielsweise dem Kreiselsektor, in dem die Rechzinken vorstehen und insofern weiter nach innen geschwenkt werden soll als die übrigen Bereiche. Besonders vorteilhaft ist jedoch die zuvor beschriebene Ausführung mit einem räumlichen Verkippen der Tragarmschwenkachse sowohl gegenüber der Horizontalen als auch gegenüber einer vertikalen Längsebene.

Je nach Ausbildung des Maschinenrahmens und des Fahrwerks des Schwaders können unterschiedliche Verkipprichtungen vorteilhaft sein. In vorteilhafter Weiterbildung der Erfindung kann die Tragarmschwenkachse derart geneigt sein, dass der Tragarm in seiner angehobenen Transportstellung in Fahrtrichtung betrachtet gegenüber einer Vertikalen nach hinten gekippt ist. Insbesondere kann die Schwenkachse in Fahrtrichtung nach hinten abfallend angeordnet sein, so dass ein weiter vorne liegender Abschnitt der Schwenkachse höher angeordnet ist als ein weiter hinten liegender Abschnitt der Schwenkachse. Vorteilhafterweise verringert sich hierdurch das Kollisionspotential der hochgeschwenkten Rechkreisel mit einer Führerhauskabine des Schleppers beispielsweise bei Durchfahren einer Bodensenke. Vor allen Dingen jedoch kann diese Anordnung vorteilhaft sein für einen Schwader, der ein am Heck des Maschinenrahmens angeordnetes Fahrwerk besitzt, da durch das nach hinten Kippen des Rechkreisels beim nach oben Schwenken der Schwerpunkt näher über das Zentrum des Fahrwerks des Maschinenrahmens gebracht wird, wodurch eine höhere Fahrstabilität erzielt werden kann.

Bezüglich des Herausdrehens der Tragarmachse aus der vertikalen Längsebene kann es in Weiterbildung der Erfindung besonders vorteilhaft sein, wenn die Tragarmschwenkachse in Fahrtrichtung nach hinten außen verkippt ist, d.h. derart verdreht ist, dass ein weiter hinten liegender Abschnitt der Tragarmschwenkachse von der vertikalen Längsmittelebene der Heuwerbungsmaschine weiter beabstandet ist als ein weiter vorne liegender Abschnitt der Tragarmschwenkachse. Hierdurch kommt der Rechkreisel beim nach oben Schwenken in die Transportstellung in eine weiter hinten liegende Stellung, die bei heckseitig angeordnetem Fahrwerk des Maschinenrahmens zentraler über dem Fahrwerk liegt. Eine solche Anordnung kann insbesondere bei Kreiselschwadern vorteilhaft sein.

Alternativ kann es in Weiterbildung der Erfindung jedoch auch vorteilhaft sein, wenn die Tragarmschwenkachse in Fahrtrichtung nach hinten innen verkippt ist, d.h. derart verdreht ist, dass ein weiter hinten liegender Abschnitt der Tragarmschwenkachse von der vertikalen Längsmittelebene der Heuwerbungsmaschine weiter beabstandet ist als ein weiter vorne liegender Abschnitt der Tragarmschwenkachse. Hierdurch kommt der Rechkreisel beim nach oben Schwenken in die Transportstellung in eine weiter vorne liegende Stellung, die bei vor dem Rechkreisel angeordnetem Fahrwerk des Maschinenrahmens zentraler über dem Fahrwerk liegt. Eine solche Konfiguration kann insbesondere bei Kreiselzettern vorteilhaft sein.

Vorteilhafterweise ist die Anordnung des Tragarms und der Tragarmschwenkachse dabei derart getroffen, dass der Tragarm in seiner abgesenkten Arbeitsstellung - grob gesprochen - etwa horizontal und rechtwinklig zur Längsrichtung des Maschinenrahmens ausgerichtet ist. Die Kreiseldrehachse, um die die Rechzinken rotieren, ist dabei vorteilhafterweise im Wesentlichen vertikal ausgerichtet.

Die Stärke der räumlichen Verkippung der Tragarmachse kann grundsätzlich je nach Geometrie und Anordnung der Rechkreisel und des Maschinenrahmens variieren, wobei es sich in jedem Fall als vorteilhaft gezeigt hat, wenn die Tragarmschwenkachse gegenüber der Horizontalen um einen Winkel im Bereich von 10° bis 45° verkippt ist. Vorzugsweise kann die Verkippung gegenüber der Horizontalen zwischen 15° und 35°, insbesondere etwa zwischen 20° und 30° betragen, wodurch ein besonders guter Kompromiss zwischen Bodenfreiraumerhöhung in Feldtransportstellung und Transporthöhenreduzierung einerseits sowie nur geringer Auswirkung auf die Gesamtlänge der Maschine andererseits erzielt wird.

Hinsichtlich des Verdrehwinkels der Tragarmschwenkachse gegenüber der vertikalen Längsebene hat es sich als vorteilhaft gezeigt, wenn die Tragarmschwenkachse gegenüber der genannten vertikalen, zur Fahrtrichtung parallelen Ebene unter einem Winkel von 5° bis 45° verdreht ist. Um gleichermaßen geringe Stützkräfte, ausreichende Höhenreduzierung in der Transportstellung und nur eine geringe Vergrößerung der Maschinengesamtlänge zu erreichen, kann in vorteilhafter Weise die Tragarmschwenkachse gegenüber der vertikalen, zur Fahrtrichtung parallelen Ebene unter einem Winkel von 10° bis 30°, insbesondere etwa 15° bis 20° verdreht sein.

Die räumlich verkippte Anordnung der Tragarmschwenkachse kann für verschiedene Konfigurationen von Heuwerbungsmaschinen vorteilhaft sein. Insbesondere von Vorteil ist die räumlich verkippte Anordnung für Mehrkreiselschwader, die zwei oder ggf. auch mehr als zwei Rechkreisel aufweisen, beispielsweise auch vier oder mehr Rechkreisel besitzen.

In vorteilhafter Weiterbildung der Erfindung kann der Heuwerbungsmaschine zwei auf gegenüberliegenden Seiten des Maschinenrahmens angeordnete Rechkreisel besitzen, die mittels jeweils eines Tragarms an dem Maschinenrahmen angelenkt sind, wobei ggf. auch vier oder mehr Rechkreisel auf gegenüberliegenden Seiten des Maschinenrahmens angeordnet sein können. Vorteilhafterweise sind hierbei die Tragarmachsen der auf gegenüberliegenden Seiten angeordneten Tragarme zueinander gegenläufig räumlich verkippt, d.h. die Tragarmachsen sind mit einem jeweils hinteren Abschnitt gegenüber der vertikalen Längsebene nach außen gedreht. Die Tragarmdrehachsen sind also spiegelbildlich bezüglich einer Längsmittelebene des Heuwerbungsmaschines angeordnet, wenn die beiden Tragarme gemäß einer vorteilhaften Ausführung der Erfindung in Fahrtrichtung betrachtet auf derselben Höhe des Maschinenrahmens angeordnet sind.

In alternativer Weiterbildung der Erfindung ist es jedoch auch möglich, die Tragarme in Fahrtrichtung versetzt voneinander anzuordnen und/oder die Tragarmdrehachsen nicht gegenläufig, sondern gleichläufig zu verdrehen, wodurch ggf. erreicht werden kann, dass die Rechkreisel in unterschiedliche Abschnitte über den Maschinenrahmen zum Zwecke des Transports geschwenkt werden können, wodurch Kollisionsprobleme vermieden werden können.

Die vorliegende Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht eines Kreiselschwaders nach einer vor- teilhaften Ausführung der Erfindung, der an einen Schlepper angebaut ist,
- Fig. 2:: eine Draufsicht von oben auf den Maschinenrahmen des Kreiselschwa- ders aus Fig. 1, die die aus der vertikalen Längsmittelebene herausge- drehte Verkippung der Tragarmschwenkachsen zeigt,
- Fig. 3:: eine schematische Seitenansicht des Maschinenrahmens des Krei- selschwaders aus Fig. 1 quer zur Fahrtrichtung, die die Verkippung der Tragarmschwenkachse gegenüber der Horizontalen zeigt,
- Fig. 4: eine perspektivische Seitenansicht auf eine Heuwerbungsmaschine in Form eines Kreiselzetters nach einer weiteren vorteilhaften Ausführung der Erfindung, die die seitlichen Tragarme und die daran gelagerten Rechkreisel in ihrer abgesenkten Arbeitsstellung zeigt, und
- Fig. 5: eine perspektivische Seitenansicht auf die Heuwerbungsmaschine aus Figur 4, die die seitlichen Tragarme und die daran gelagerten Rechkrei- sel in ihrer angehobenen Transport- bzw. Vorgewendestellung zeigt .

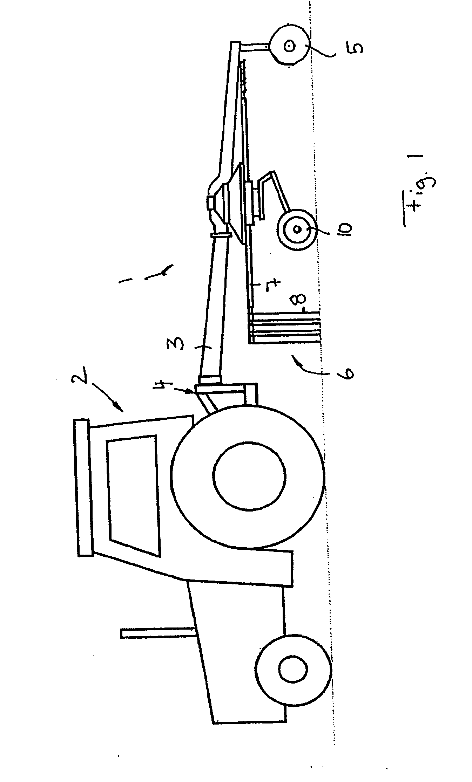

Der in Fig. 1 gezeigte Kreiselschwader 1 ist in an sich bekannter Weise an das Heck eines Schleppers 2 anbaubar. Hierzu umfasst der Maschinenrahmen 3 des Kreiselschwaders 1 in an sich bekannter Weise an seinem vorderen Ende eine geeignete Ankupplungsvorrichtung 4.

Der genannte Maschinenrahmen 3 ist im Wesentlichen in Form eines sich in Fahrtrichtung erstreckenden Längsrahmens ausgebildet, der, wie Fig. 1 zeigt, mittels eines Fahrwerks 5, das vorteilhafterweise am Heck des Maschinenrahmens 3 angeordnet sein kann, am Boden abgestützt wird.

Der Kreiselschwader 1 kann hierbei als Mehrkreiselschwader, insbesondere Zweikreiselschwader ausgebildet sein, der in Fahrtrichtung betrachtet rechts und links vom Maschinenrahmen 3 jeweils einen Rechkreisel 6 aufweist. Jeder Rechkreisel umfasst dabei in an sich bekannter Weise eine Vielzahl von sternförmig angeordneten Zinkenträgern 7, die an ihren auskragenden Enden Rechzinken 8 tragen und in der Arbeitsstellung um aufrechte Kreiselachsen umlaufen. Dabei werden die genannten Zinken auf ihrer Umlaufbahn zyklisch jeweils um ihre Längsachsen verdreht, so dass die Rechzinken in einem Sektor ihrer Umlaufbahn nach unten geschwenkt über den Boden fahren und darauf liegendes Erntegut zusammenrechen und in einem anderen Sektor der Umlaufbahn nach oben schwenken, um das zusammengerechte Erntegut in einem Schwad abzulegen.

Die beiden Rechkreisel 6 können dabei in Fahrtrichtung betrachtet zueinander versetzt oder unversetzt angeordnet sein, wobei nach einer Ausführung der Erfindung eine Anordnung der beiden Rechkreisel 6 unmittelbar gegenüberliegend auf beiden Seiten des Maschinenrahmens 3 vorteilhaft sein kann.

Jeder der Rechkreisel 6 ist dabei mittels eines Tragarms 9, der vom Maschinenrahmen 3 quer auskragt, an dem genannten Maschinenrahmen 3 angelenkt. Der Tragarm 9 erstreckt sich dabei in der abgesenkten Arbeitsstellung, die Fig. 1 zeigt, im Wesentlichen horizontal senkrecht zur Längsachse des Maschinenrahmens 3 bzw. senkrecht zur Fahrtrichtung. Die Rechkreisel 6 können dabei an einem äußeren Ende der genannten Tragarme 9 jeweils gelenkig aufgehängt sein, so dass über das unter den Rechkreiseln 6 angeordnete Tastfahrwerk 10 eine entsprechende Bodenanpassung erfolgen kann.

Die genannten vom Maschinenrahmen 3 quer auskragenden Tragarme 9 sind dabei an dem Maschinenrahmen 3 um jeweils eine Tragarmschwenkachse 11 schwenkbar angelenkt und können mittels einer geeigneten Hub- bzw. Schwenkvorrichtung beispielsweise in Form von Hydraulikzylindern aus der in Fig. 1 gezeigten, abgesenkten Arbeitsstellung in eine ausgehobene Transportstellung nach oben geschwenkt werden. Hierbei können die genannten Tragarme 9 nur ein Stück weit in eine angehobene Feldtransportstellung oder Vorgewendestellung gebracht werden, oder auch ganz nach oben in eine Straßentransportstellung geschwenkt werden.

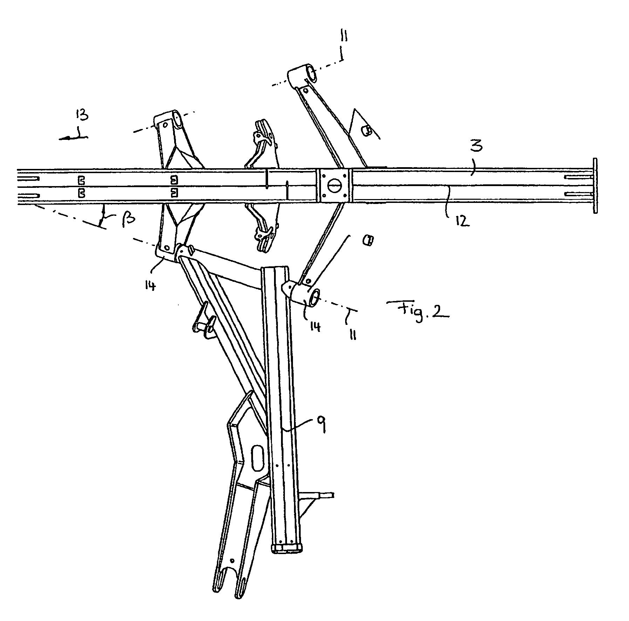

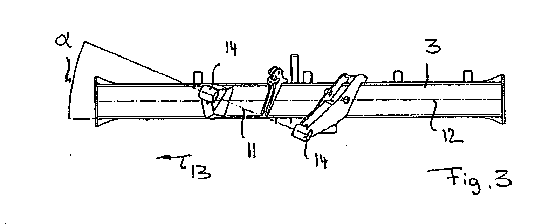

Wie die Figuren 2 und 3 zeigen, erstreckt sich jede der Tragarmschwenkachsen 11, um die der jeweilige Tragarm 9 zusammen mit dem daran angelenkten Rechkreisel 6 nach oben geschwenkt werden kann, gegenüber der Maschinenrahmenlängsachse 12 bzw. der Fahrtrichtung des Kreiselschwaders 1 in einer räumlich verkippten Anordnung.

Zum einen sind die genannten Tragarmschwenkachsen 11 jeweils unter einem Winkel β gegenüber einer vertikalen Längsebene herausgedreht bzw. verkippt, und zwar vorteilhafterweise derart, dass die Tragarmschwenkachse 11 schräg nach hinten außen verläuft, d.h. ein in Fahrtrichtung weiter hinten liegender Abschnitt der Tragarmschwenkachse 11 ist von der genannten Längsmittelebene weiter beabstandet als ein weiter vorne liegender Abschnitt der Tragarmschwenkachse 11. Den genannten spitzen Winkel β zeigt Fig. 2, wobei in vorteilhafter Weiterbildung der Erfindung der genannte Winkel zwischen 10° und 30° betragen kann. In der in Fig. 2 gezeichneten Ausführung beträgt er 18°.

Zum anderen sind die genannten Tragarmschwenkachsen 11 jeweils gegenüber der Horizontalen bzw. gegenüber eine bodenparallelen Ebene geneigt, wie dies Fig. 3 zeigt. Vorteilhafterweise ist die Neigung dabei derart gewählt, dass die Tragarmschwenkachsen 11 in Fahrtrichtung nach hinten abfallend angeordnet sind. Der entsprechende spitze Neigungswinkel α gegenüber der Horizontalen ist in Fig. 3 eingetragen und beträgt vorteilhafterweise zwischen 15° und 35°. In der in Fig. 3 gezeichneten Ausführung beträgt der genannten Neigungswinkel α zur Horizontalen 24°.

Durch die zweiachsig verkippte Anordnung der Tragarmschwenkachse 11 ergeben sich beim nach oben Schwenken der Tragarme 9 und der daran angelenkten Rechkreisel 6 beträchtliche Vorteile. Zum einen wird die Transporthöhe in der Straßentransportstellung beträchtlich reduziert, auch wenn die Tragarme 9 nicht teleskopierbar ausgebildet sind. Zum anderen wird ein großer Bodenfreiraum in Feldtransportstellung erzielt. Überdies lässt sich die Stützlast reduzieren und die Fahrstabilität erhöhen, da die Rechkreisel 6 beim nach oben Schwenken sozusagen nach hinten über das Fahrwerk 5 gekippt werden. Schließlich zeichnet sich die gesamte Anordnung des Kreiselschwaders 1 insbesondere hinsichtlich der Tragarmkonstruktion und Aufhängung durch ihre einfache Bauweise aus, die mit wenigen Bauteilen auskommt, keine Vielzahl von Schwenkachsen und Freiheitsgraden benötigt und auf Zusatzmechaniken wie Umlenkgestänge am Kreiselausleger verzichten kann.

Um die durch den Kippvorgang auftretenden Kippkräfte und Biegemomente an den Tragarmen 9 besser auffangen zu können, können die Tragarme 9 insbesondere im Bereich ihrer Anlenkung am Maschinenrahmen 3 in Form eines Gitterstabwerks ausgebildet sein, vgl. Fig. 2, wobei vorteilhafterweise die Lagerkräfte an der Tragarmschwenkachse 11 durch zwei voneinander beabstandete Lagerstellen 14 abgefangen werden können, die durch ihren breiten Lagerabstand günstige Hebelverhältnisse bewirken. Wie Fig. 2 zeigt, kann der Tragarm 9 zu den Lagerstellen 14 hin eine V-förmige Rahmenverbreiterung aufweisen, die gitterstabwerksartig ausgebildet sein kann und rechts und links von zwei Schwenklagern von außen her eingefasst sein kann, vgl. Fig. 2.

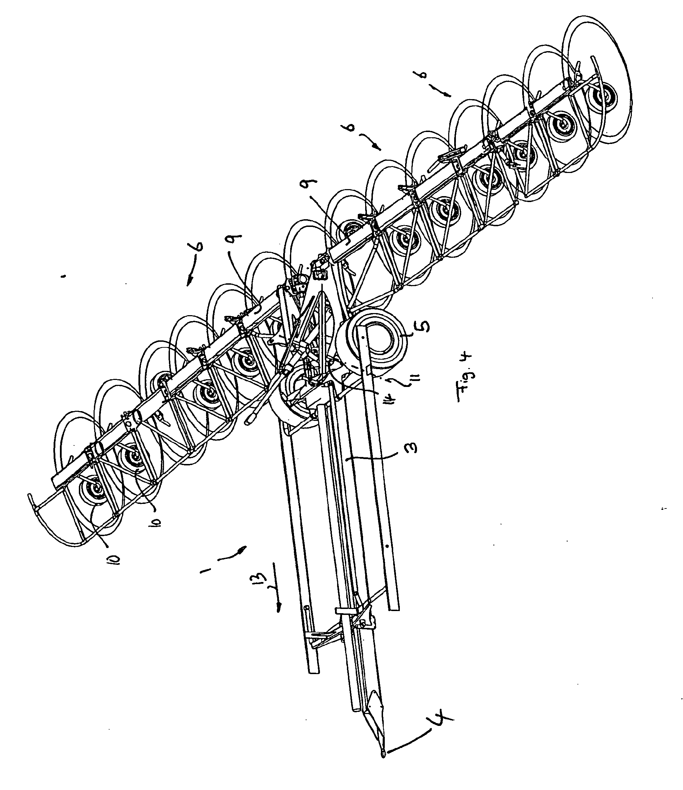

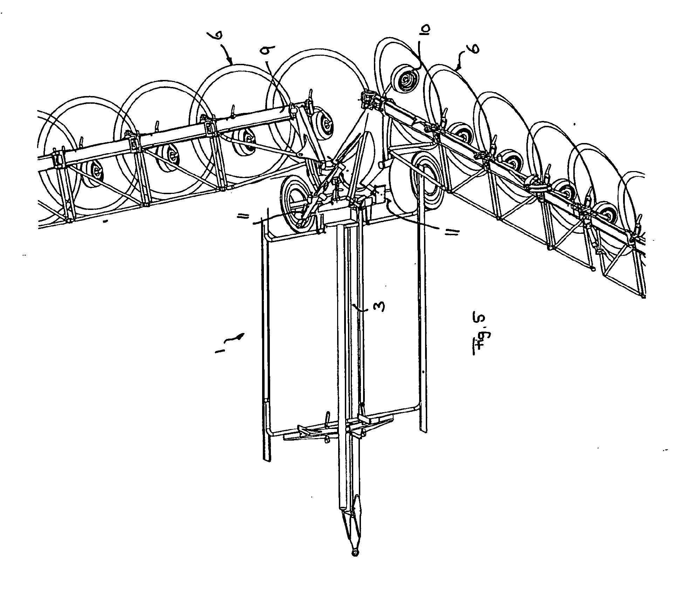

Die Figuren 4 und 5 zeigen eine grundsätzlich ähnliche Heuwerbungsmaschine, allerdings in Form eines Kreiselzetters. Der in Fig. 4 gezeigte Kreiselzetter 1 ist in an sich bekannter Weise an das Heck eines Schleppers anbaubar. Hierzu umfasst der Maschinenrahmen 3 des Kreiselzetters 1 in an sich bekannter Weise an seinem vorderen Ende eine geeignete Ankupplungsvorrichtung 4, wobei der genannte Maschinenrahmen 3 im Wesentlichen in Form eines sich in Fahrtrichtung erstreckenden Längsrahmens ausgebildet ist, der mittels eines Fahrwerks 5, das vorteilhafterweise am Heck des Maschinenrahmens 3, jedoch noch vor den davon seitlich auskragenden Tragarmen angeordnet sein kann, am Boden abgestützt wird.

Eine Vielzahl von Rechkreiseln 6 des Zetters sind dabei jeweils mittels eines Tragarms 9, der vom Maschinenrahmen 3 quer auskragt, an dem genannten Maschinenrahmen 3 angelenkt. Der Tragarm 9 erstreckt sich dabei in der abgesenkten Arbeitsstellung, die Fig. 1 zeigt, im Wesentlichen horizontal senkrecht zur Längsachse des Maschinenrahmens 3 bzw. senkrecht zur Fahrtrichtung.

Die Tragarme 9 sind dabei an dem Maschinenrahmen 3 um jeweils eine Tragarmschwenkachse 11 schwenkbar angelenkt und können mittels einer geeigneten Hub- bzw. Schwenkvorrichtung beispielsweise in Form von Hydraulikzylindern aus der abgesenkten Arbeitsstellung in eine ausgehobene Transportstellung, die Fig. 5 zeigt, nach oben geschwenkt werden. Hierbei können die genannten Tragarme 10 nur ein Stück weit in eine angehobene Feldtransportstellung oder Vorgewendestellung gebracht werden, oder auch ganz nach oben in eine Straßentransportstellung geschwenkt werden.

Ähnlich der zuvor beschriebenen Ausführung sind die genannten Tragarmschwenkachsen 11 gegenüber einer vertikalen Längsebene herausgedreht bzw. verkippt, vorteilhafterweise derart, dass die Tragarmschwenkachse 11 schräg nach hinten innen verläuft, d.h. ein in Fahrtrichtung weiter vorne liegender Abschnitt der Tragarmschwenkachse 11 ist von der genannten Längsmittelebene weiter beabstandet als ein weiter hinten liegender Abschnitt der Tragarmschwenkachse 11. Der entsprechende Kippwinkel kann zwischen 10° und 30° betragen. Zum anderen sind die genannten Tragarmschwenkachsen 11 jeweils gegenüber der Horizontalen bzw. gegenüber eine bodenparallelen Ebene geneigt, wie dies Fig. 4 oder 5 zeigt. Vorteilhafterweise ist die Neigung dabei derart gewählt, dass die Tragarmschwenkachsen 11 in Fahrtrichtung nach hinten ansteigend angeordnet sind. Der entsprechende spitze Neigungswinkel gegenüber der Horizontalen beträgt vorteilhafterweise zwischen 15° und 35°.

Die Rechkreisel werden daher gegenüber ihrer seitlichen Arbeitsstellung gem. Fig 4 nach vorne und oben in ihre Transport- bzw. Vorgewendestellung gem. Fig. 5 geschwenkt.

## Patentansprüche

1. Heuwerbungsmaschine, vorzugsweise in Form eines Kreiselschwaders, mit einem sich etwa in Fahrtrichtung erstreckenden Maschinenrahmen (3), der an einem vorderen Ende eine Ankupplungsvorrichtung (4) zur Ankupplung an einen Schlepper (2) aufweist und mit einem Fahrwerk (5) am Boden abgestützt ist, sowie zumindest einem Rechkreisel (6), der mittels eines quer vom Maschinenrahmen (3) auskragenden Tragarms (9) am Maschinenrahmen (3) angelenkt ist, wobei der längenunveränderbar ausgebildete und nur eine Tragarmschwenkachse aufweisende Tragarm (9) an dem Maschinenrahmen (3) in Fahrtrichtung betrachtet vor oder hinter dem Fahrwerk (5) um eine Tragarmschwenkachse (11) schwenkbar gelagert und zusammen mit dem daran befestigten Rechkreisel (6) in eine Transportstellung anhebbar und in eine Arbeitsstellung absenkbar ausgebildet ist, **dadurch gekennzeichnet, dass** die Tragarmschwenkachse (11) gegenüber einer horizontalen Ebene spitzwinklig geneigt ist, so dass der Rechkreisel (6) beim Nach-oben-Schwenken aus der Arbeitsstellung in die Transportstellung in Fahrtrichtung betrachtet nach hinten oder nach vorne über das Fahrwerk (5) des Maschinenrahmens (3) verkippt wird.

2. Heuwerbungsmaschine nach dem vorhergehenden Anspruch, wobei die Tragarmschwenkachse (11) gegenüber einer vertikalen, zur Fahrtrichtung (13) parallelen Längsebene spitzwinklig geneigt ist.

3. Heuwerbungsmaschine nach einem der vorhergehenden Ansprüche, wobei die Tragarmschwenkachse (11) gegenüber der Fahrtrichtung (13) der Heuwerbungsmaschines (1) zweiachsig verkippt ist.

4. Heuwerbungsmaschine nach einem der vorhergehenden Ansprüche, wobei die Tragarmschwenkachse (11) gegenüber der horizontalen Ebene um einen Winkel α im Bereich von 10° bis 45°, vorzugsweise 15° bis 35°, insbesondere 20° bis 30° geneigt ist.

5. Heuwerbungsmaschine nach einem der vorhergehenden Ansprüche, wobei die Tragarmschwenkachse (11) gegenüber einer vertikalen, zur Fahrtrichtung parallelen Längsebene um einen Winkel β im Bereich von 5° bis 45°, vorzugsweise 10° bis 30°, insbesondere 15° bis 20°, verkippt ist.

6. Heuwerbungsmaschine nach einem der vorhergehenden Ansprüche, wobei die Tragarmschwenkachse (11) in Fahrtrichtung (13) nach hinten unten verkippt ist und/oder derart geneigt ist, dass der Tragarm (9) in seiner aufrechten Transportstellung gegenüber der Vertikalen in Fahrtrichtung betrachtet nach hinten gekippt ist.

7. Heuwerbungsmaschine nach einem der vorhergehenden Ansprüche, wobei die Tragarmschwenkachse (11) zur Längsachse des Tragarms (9) spitzwinklig geneigt ist.

8. Heuwerbungsmaschine nach einem der vorhergehenden Ansprüche, wobei der Tragarm (9) mit seiner Längsachse in der abgesenkten Arbeitsstellung im Wesentlichen senkrecht zur Maschinenlängsrichtung und/oder senkrecht zur Fahrtrichtung (13) ausgerichtet ist.

9. Heuwerbungsmaschine nach einem der vorhergehenden Ansprüche, wobei der Tragarm (9) mit seiner Längsachse in der abgesenkten Arbeitsstellung im Wesentlichen horizontal ausgerichtet ist.

10. Heuwerbungsmaschine nach einem der vorhergehenden Ansprüche, wobei an dem Maschinenrahmen (3) zumindest zwei Rechkreisel (6) mittels zwei Tragarmen (9) auf gegenüberliegenden Seiten des Maschinenrahmens (3) angeordnet sind, deren Tragarmschwenkachsen (11) zueinander gegenläufig verkippt sind.

11. Heuwerbungsmaschine nach dem vorhergehenden Anspruch, wobei die beiden Tragarme (9) in Fahrtrichtung auf etwa derselben Höhe und/oder etwa gleich weit hinten angeordnet sind.

## Claims

1. A hay-making machine, preferably in the form of a rotary swather, having a machine frame (3) which extends approximately in the direction of travel and which has a coupling apparatus (4) at its front end for coupling to a tractor (2) and whose chassis (5) is supported on the ground, as well as having at least one rotary rake (6) which is pivotally connected to the machine frame (3) by means of a carrier arm (9) projecting transversely to from the machine frame (3), wherein the carrier arm (9), which is made with an unchangeable length and which has only one carrier arm pivot axis, is supported pivotally about a carrier arm pivot axis (11) at the machine frame (3) in front of or behind the chassis (5), viewed in the direction of travel, and can be raised together with the rotary rake (6) fastened thereto into a transport position and is made lowerable into a work position, **characterised in that** the carrier arm pivot axis (11) is inclined at an acute angle with respect to a horizontal plane so that the rotary rake (6) is tilted to the rear or to the front, considered in the direction of travel, over the chassis (5) of the machine frame (3) on the upward pivoting from the work position into the transport position.

2. A hay-making machine in accordance with the preceding claim, wherein the carrier arm pivot axis (11) is inclined at an acute angle with respect to a vertical longitudinal plane parallel to the direction of travel (13).

3. A hay-making machine in accordance with one of the preceding claims, wherein the carrier arm pivot axis (11) is tilted biaxially with respect to the direction of travel (13) of the hay-making machine (1).

4. A hay-making machine in accordance with one of the preceding claims, wherein the carrier arm pivot axis (11) is inclined with respect to the horizontal plane by an angle α in the region of 10° to 45°, preferably 15° to 35°, in particular 20° to 30°.

5. A hay-making machine in accordance with one of the preceding claims, wherein the carrier arm pivot axis (11) is tilted with respect to a vertical longitudinal plane parallel to the direction of travel about an angle β in the range from 5° to 45°, preferably 10° to 30°, in particular 15° to 20°.

6. A hay-making machine in accordance with one of the preceding claims, wherein the carrier arm pivot axis (11) is downwardly tilted to the rear in the direction of travel (13) and/or is inclined so that the carrier arm (9) is tilted in its upright transport position rearwardly with respect to the vertical viewed in the direction of travel.

7. A hay-making machine in accordance with one of the preceding claims, wherein the carrier arm pivot axis (11) is inclined at an acute angle with respect to the longitudinal axis of the carrier arm (9).

8. A hay-making machine in accordance with one of the preceding claims, wherein the carrier arm (9) is aligned with its longitudinal axis in the lowered work position substantially perpendicular to the longitudinal machine direction and/or perpendicular to the direction of travel (13).

9. A hay-making machine in accordance with one of the preceding claims, wherein the carrier arm (9) is aligned with its longitudinal axis substantially horizontally in the lowered work position.

10. A hay-making machine in accordance with one of the preceding claims, wherein at least two rotary rakes (6) are arranged at the machine frame (3) on oppositely disposed sides of the machine frame (3) by means of two carrier arms (9) whose carrier arm pivot axes (11) are tilted opposite to one another.

11. A hay-making machine in accordance with the preceding claim, wherein the two carrier arms (9) are arranged approximately at the same level and/ or approximately equally far to the rear in the direction of travel.

## Revendications

1. Faneuse, de préférence sous la forme d'un andaineur rotatif, avec un cadre de machine (3) s'étendant approximativement dans le sens de la course, qui présente à une extrémité avant un dispositif d'attelage (4) destiné à l'attelage sur un tracteur (2) et est appuyé au sol avec un châssis (5), ainsi qu'au moins un râteau rotatif (6), qui est articulé au moyen d'une console (9) faisant saillie transversalement au cadre de machine (3) sur le cadre de machine (3), la console (9) construite de manière non modifiable en longueur et présentant seulement un axe pivotant de console étant tournée sur paliers pivotants autour d'un axe pivotant de console (11) devant ou derrière le châssis (5) vu dans le sens de la course sur le cadre de machine (3) et construite de manière levable dans une position de transport et abaissable dans une position de travail ensemble avec le râteau rotatif (6) fixé à celle-ci, **caractérisée en ce que** l'axe pivotant de console (11) est incliné à angle aigu par rapport à un plan horizontal, de sorte que le râteau rotatif (6) est désaligné lors du pivotement vers le haut de la position de travail dans la position de transport vers l'arrière ou vers l'avant vu dans le sens de la course et au-dessus du châssis (5) du cadre de machine (3).

2. Faneuse selon la revendication précédente, l'axe pivotant de console (11) étant incliné à angle aigu par rapport à un plan longitudinal vertical parallèle au sens de la course (13).

3. Faneuse selon une quelconque des revendications précédentes, l'axe pivotant de console (11) étant désaligné de manière biaxiale par rapport au sens de la course (13) de la faneuse (1).

4. Faneuse selon une quelconque des revendications précédentes, l'axe pivotant de console (11) étant incliné par rapport au plan horizontal d'un angle α dans la zone de 10 ° à 45 °, de préférence de 15 ° à 35 °, notamment de 20 ° à 30 °.

5. Faneuse selon une quelconque des revendications précédentes, l'axe pivotant de console (11) étant désaligné par rapport à un plan longitudinal vertical parallèle au sens de la course d'un angle β dans la zone de 5 ° à 45 °, de préférence de 10 ° à 30 °, notamment de 15 ° à 20 °.

6. Faneuse selon une quelconque des revendications précédentes, l'axe pivotant de console (11) étant désaligné en bas vers l'arrière dans le sens de la course (13) et/ou incliné de telle manière que la console (9) est désalignée vers l'arrière dans sa position de transport droite vue dans le sens de la course par rapport à la verticale.

7. Faneuse selon une quelconque des revendications précédentes, l'axe pivotant de console (11) étant incliné à angle aigu par rapport à l'axe longitudinal de la console (9).

8. Faneuse selon une quelconque des revendications précédentes, la console (9) étant alignée avec son axe longitudinal dans la position de travail abaissée principalement de manière verticale par rapport au sens longitudinal de la machine et/ou verticalement par rapport au sens de la course (13).

9. Faneuse selon une quelconque des revendications précédentes, la console (9) étant alignée avec son axe longitudinal dans la position de travail abaissée principalement de manière horizontale.

10. Faneuse selon une quelconque des revendications précédentes, au moins deux râteaux rotatifs (6) étant disposés sur le cadre de machine (3) au moyen de deux consoles (9) sur les côtés opposés du cadre de machine (3), dont les axes pivotants de console (11) sont désalignés de manière opposée l'un à l'autre.

11. Faneuse selon la revendication précédente, les deux consoles (9) étant disposées dans le sens de la course à environ la même hauteur et/ou à la même distance approximative à l'arrière.
